(19) Europäisches Patentamt
European Patent Office
Office européen des brevets

(11) **EP 4 471 695 A1**

(12) **EUROPEAN PATENT APPLICATION**

(43) Date of publication:
**04.12.2024 Bulletin 2024/49**

(21) Application number: **23176530.6**

(22) Date of filing: **31.05.2023**

(51) International Patent Classification (IPC):
**G06Q 20/06** (2012.01)    **G06Q 20/36** (2012.01)
**G06Q 20/38** (2012.01)

(52) Cooperative Patent Classification (CPC):
**G06Q 20/065; G06Q 20/3829; G06Q 20/401**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Giesecke+Devrient advance52 GmbH
81677 München (DE)**

(72) Inventor: **HUPEL, Lars
81677 München (DE)**

(74) Representative: **Ter Meer Steinmeister & Partner
Patentanwälte mbB
Nymphenburger Straße 4
80335 München (DE)**

Remarks:
Amended claims in accordance with Rule 137(2)
EPC.

(54) **SECURE TRANSACTION UNIT, TOKEN REFERENCE REGISTER, ELECTRONIC PAYMENT TRANSACTION SYSTEM AND METHOD FOR REGISTERING TOKENS IN A TOKEN REFERENCE REGISTER**

(57) The invention relates to a secure transaction unit. The invention also relates to a token reference register. The invention also relates to an electronic transaction system in particular an electronic payment transaction system. The invention may also relate to a method for registering tokens in a token reference register.

**Fig. 2a**

EP 4 471 695 A1

**Fig. 2b**

**Description**

The invention relates to a secure transaction unit. The invention also relates to a token reference register. The invention also relates to an electronic transaction system in particular an electronic payment transaction system. The invention may also relate to a method for registering tokens in a token reference register.

Tokens - also referred to as digital assets, electronic coins, coin data sets - may represent any digital asset, in particular a digital currency, preferably a central bank digital currency, short CBDC. These tokens are issued and deleted by an issuing unit of the payment transaction system, such as an issuing authority, or a central bank unit or a commercial bank unit, hereinafter also referred to as secure token issuing unit.

Electronic token transactions and/or storage of tokens and any associated transaction data and/or storage data in an electronic payment transaction system must be safe and secure and so, means for protecting confidentiality, integrity, and availability of exchanged and/or stored token data must be implemented. This is especially true for electronic payment transactions and associated payment transactions and payment storages in which a monetary value is linked with each token.

There are different technical approaches for a digital asset e.g. digital currency such as CBDC, issued by a central bank.

According to a first approach, tokens are merely cryptographically secured by the central bank unit and the cryptographically secured tokens are exchanged directly between token transaction units - also referred to as secure wallets and/or secure elements - of the participants in the electronic payment system in an encrypted manner. The exchanged token may also be stored in an encrypted manner. The token transaction units can verify the authenticity of the tokens based on the cryptographic security, such as keys and signatures, and for example checks a certificate from the central bank and/or the other token transaction units for validity within the certificate hierarchy in advance via online access or following the offline protocol of the system.

According to a second approach, tokens are stored in a centralized or decentralized blockchain/distributed ledger of the payment transaction system, e.g., organized by a central bank unit. For a payment transaction, an ownership of a token record changes in the blockchain for which a lot of information (sender/recipient/amount) is required and/or even published. Sender and recipient of the token need an online access to the blockchain at the time of the transaction.

According to a favorable third approach as for instance described in WO 2020 / 212 331 A1 tokens are stored in a local token management unit (also called wallet or payment application unit or secure element) to be directly exchanged between participants of an electronic payment transaction system. The transferred token can validly be used after receipt from another participant without a need of approval or verification via an online connection. So, if an online connection is not available or inconvenient or should not be used for a specific token transaction, it remains possible to validly transfer tokens directly between participants in the electronic payment transaction system. For security-, verification- and registration-purposes, a token reference register stores token references of all valid tokens without knowing the tokens itself. So, the user can check validity of a received token. The token reference register only stores token references of the corresponding token. Tokens can be further modified by each participant of the payment transaction system, e.g., ownership of tokens can be switched from one participant to another participant (SWITCH modification), tokens can be split into plural tokens, e.g., for obtaining a token with a reduced monetary value (SPLIT modification) and/or plural tokens can be merged to a single token, e.g., for obtaining a token with a higher monetary value (MERGE modification). Digital signatures are used to further enhance the security.

The electronic payment transaction system according to the third approach may comprise more than one token issuer instances. For instance, a first financial service provider unit, such as a commercial bank A, may issue token-A and a second financial service provider unit, such as a commercial bank B, may issue token-B. Token-A always represents a liability with respect to the first financial service provider unit, even if - for whatever reason - this token A is managed by the second financial service provider unit. Token-B always represents a liability with respect to the second financial service provider unit, even if - for whatever reason - this token B is managed by the first financial service provider unit.

There is a need for inter-operability between token-A and token-B. More precisely, it should be possible that a first participant having token-A and a second participant having token-B should be able to perform a payment transaction.

It should also be possible that a first participant initiates a payment transaction using token-A and that a second participant returns change within the same payment transaction, the change being token-B.

It should further be possible that a first participant having token-A with history data that has been used for a plurality of offline payment transactions without registration in the token reference register can exchange such a token-A issued by a first token issuance unit with a token-B from a second token issuance unit having lesser or no history data.

It should also be possible that the first participant, e.g. a service provider unit issuing token-A can clear token-B and that the second participant, e.g. a second service provider unit issuing token-B can clear the token-A.

However, safety and confidentiality must be assured at any times to avoid attacks, such as double-spending of tokens and/or spending tokens with fraud-generated (not in real existing) monetary values.

The above-identified objectives are solved with the features of the independent patent claims. Further advantageous embodiments are described in the dependent patent claims.

In an aspect of the present invention there is provided a secure transaction unit, preferably a secure transaction unit of a financial service provider unit, for managing payment transactions in an electronic payment transaction system.

The secure transaction unit comprises means for exchanging one or more tokens with other secure transaction units in the electronic payment transaction system. So, the secure transaction unit is capable of receiving of tokens from and/or transmitting of tokens to another secure transaction unit in the system.

The secure transaction unit further comprises means for transmitting registration requests to a token reference register of the electronic transaction system for registering the tokens in the electronic payment transaction system.

The secure transaction unit further comprises control means configured to - in a first (operating) mode (of the secure transaction unit) - generate single registration requests comprising only single modification-commands concerning a modification of a token of the secure transaction unit. In this regard, the control means may be further configured to generate one or more token references, especially upon modification commands being processed by the secure transaction unit, the modification commands being preferably one or more of a switch-command, a merge-command and a split-command, wherein the modification commands are only performed for tokens having the same token-type information. The single registration request may comprise plural modification commands, for instance as history data - so called proofs. However, mainly there is only one modification to be performed within a single registration request.

In a second (operating) mode (of the secure transaction unit) the control means are configured to generate and/or process common registration requests.

In a first version, the common registration request comprises more than one modification-command, wherein a modification-command of a common registration request is related to a modification of a token of another secure transaction unit and wherein another modification-command of the common registration request is related to a modification of a token of the secure transaction unit.

In a (second) version, the common registration request comprises one, preferably only one, modification-command, one or more token references related to a modification of a token of the secure transaction unit, and one or more token references related to a modification of a token from another secure transaction unit (TU).

Token references within a common registration request are token references necessary to register a token transaction that two individual secure transactions commonly perform. These token references of common registration requests are different from token references that are part of history data, such as proofs, that are related to offline token transactions that occurred in the past and that are all referring to single modification requests.

Prior generating the common registration request, the secure transaction units involved in the common token transaction share the necessary token references.

So, the secure transaction unit is capable of operating in two distinct operating modes, wherein in a first mode, the conventional single registration requests - as known from the third approach - are generated and processed.

In the inventive second mode, the control means is capable to generate and/or process common registration requests. Common registration requests are registration requests to be transmitted to the token reference register and having modification commands for tokens of different, at least two secure transaction units. These common registration requests, also referred to as combined registration requests, are used to perform so called combined modifications. Combined modifications are modifications - each of them is referred to conventional single modification(s) of token(s) - as for instance known from the third approach - that are generated and processed by at least two secure transaction units.

In this regard, the control means may be configured to generate one or more token references, especially upon a modification command being processed by each secure transaction unit, the modification commands being preferably one or more of a switch-command, a merge-command and a split-command, wherein the modification commands are only performed for tokens having the same token-type information.

The main difference between single registration requests and common registration requests lies in the structure of the request, namely that common registration requests comprises token references related to token from the own transaction unit and also from another secure transaction unit. Since the common registration request comprises token references from more than one secure transaction unit, more than one modification of tokens is to be registered. In contrast, single registration requests merely comprise token references of token of the own secure transaction unit, thus only one modification of tokens is to be registered.

Proofs as history data may be inserted as additional elements of a common registration request. However, it is emphasized that such proofs as history data are not considered as the common registration request itself, because such proofs are only an evidence that a former token transaction was performed, whereas the common registration requests as described here is the indication that an interaction of two secure transaction units for a valid token transaction is needed - in which both transaction units are involved with own modifications on token (for one token transaction).

The common registration request is only validly processed if all modifications are valid and can be verified, e.g. by a token reference register. If one or more of the included modifications fails or is invalid, all modifications in that common registration request are invalid and will be reverted.

The term "registration request" is synonym to the term "replacement request".

Since the common registration request comprises token references from more than one secure transaction unit, more than one modification of tokens is to be registered. Preferably, all these modifications within one common registration request are realized as an atomic-operation. Since common registration requests include token references from other secure transaction units, only in case all modifications to which the common registration request refers are successfully performed, the registration is valid, otherwise the registration is not valid, and none of the modification-command(s) is registered.

Each common registration request comprises token references from token of the secure transaction unit and from another transaction unit. Thus, each token reference being uniquely assigned to one token of the secure transaction unit or the other secure transaction unit. Each token assigned to token references of common registration requests comprises at least a monetary value and a private key of a token-individual key pair as token elements.

Each token reference comprises the monetary value of the assigned token and a public key corresponding to the private key of the token-individual key pair as token reference elements.

The control means of the secure transaction unit is further configured to generate one or more token references, especially upon modification commands (replacement requests) being processed by the secure transaction unit, the modification commands being preferably one or more of a switch-command, a merge-command and a split-command, wherein the modification commands are only performed for tokens having the same token-type information. For further details related to these modification commands it is referred to WO 2020 / 212 331 A1 and WO 2020 / 212 331 A1.

The monetary value of a first token may be equal to the monetary value of a second token, so it is avoided that money can be generated or destroyed.

A common registration request RR has the basic structure of the following three elements: command type, n number of input token reference(s), and m number of output token reference(s).

Each command type has a characteristic number of input token reference(s) ("inputs") and output token reference(s) ("outputs").

Each single registration request comprises an integer number of input token references and an integer number of output token references all referring to tokens of the secure transaction unit. For a switch-modification, the integer number of input token references and the integer number of output token references is always identical. For single switch-modfication this integer number is "1". For a common switch-modification, the integer number is "2".

For a merge-modification, the integer number of input token references $TR_{in}$ is higher than the integer number of output token references. For a single merge-modification, the integer number of input token references $TR_{in}$ is "2"and the integer number of output token references $TR_{out}$ is "1".

For a split-modification, the integer number of input token references $TR_{in}$ is smaller than the integer number of output token references $TR_{out}$. For a single split-modification, the integer number of input token references $TR_{in}$ is "1"and the integer number of output token references $TR_{out}$ is "2".

For a common registration request $RR_c$, the integer number of input token references $TR_{in}$ and the integer number of output token references $TR_{out}$ can very be different and can be any integer number.

The common registration request may comprise a first switch-command on a first token to obtain a third token having a monetary value (v) of the first token. The common registration request may additionally or alternatively comprise a second switch-command on a second token to obtain a fourth token having the monetary value of the second token.

The processing of the common registration request may require a signing of the common registration request with a digital signature. The digital signature is generated by the secure transaction unit and/or the other secure transaction unit. The generation may be made commonly, which means that the other secure transaction unit shares the necessary content with the signing secure transaction unit and the common content is signed by the one transaction unit using its own key.

The generation may be independent, meaning that each secure transaction unit shares some necessary content with the other secure transaction unit and both transaction units generate an own signature with its own key.

This digital signature preferably provides evidence that the respective token of one of the secure transaction units is owned by the respective secure transaction unit. So, security is increased.

The digital signature may be a commonly applied (generated) signature on the modification-command of the common registration request related to the modification of the token of the other secure transaction unit and on the other modification-command of the common registration request related to the modification of the token of the secure transaction unit. So, the all modification-commands of the entire common registration request are signed together to proof its knowledge for increasing security.

In an embodiment, a first digital signature is generated by the secure transaction unit on the modification-command of the common registration request and the one or more token references (TR) related to the modification of the token (T) of the secure transaction unit and wherein a second digital signature is generated by the other secure transaction unit on the (same) modification-command of the common registration request and the one or more token references (TR) related to the modification of the token (T) of the other secure transaction unit.

So, in a first variant, each secure transaction unit independently generates and signs the common registration request in order to proof its knowledge for increasing security. Prior generating the common registration request, the secure transaction units involved in the common token transaction share the necessary token references. The transaction unit may add the generated signature to the common registration request prior sending it to a token reference register.

In a preferred second variant, prior generating the common registration request, the other secure transaction unit shares the token references of the token to be modified with the transaction unit that generates and signs the common registration request to proof its knowledge for increasing security. In addition, the secure transaction unit may also share the token references of the token to be modified with the other secure transaction unit that generates and signs the common registration request. The other secure transaction unit may provide the signature to the secure transaction unit. The transaction unit may add the generated and the received signature to the common registration request prior sending the request to a token reference register.

In another embodiment, a first digital signature is generated by the secure transaction unit on the modification-command, one input token reference related to the tokens of the secure transaction unit, all output token references related to the tokens of the secure transaction unit, and all output token references related to the tokens of the other secure transaction unit. Prior generating the common registration request, the secure transaction units involved in the common token transaction share the necessary token references. The transaction unit may add the generated signature to the common registration request prior sending it to a token reference register.

In addition or alternatively, a second digital signature is generated by the other secure transaction unit on the other modification-command, one input token reference related to the tokens of the other secure transaction unit, all output token references related to the tokens of the secure transaction unit, and all output token references related to the tokens of the other secure transaction unit. Prior generating the common registration request, the secure transaction units involved in the common token transaction share the necessary token references. The other transaction unit may add the generated second signature to the common registration request prior sending it to a token reference register. So, one or all of the secure transaction units may sign all output token references of the common registration request in order to proof its knowledge for increasing security.

In this embodiment only one input token reference and "m" output token references are described. In a further variant, the number of input token references is greater than "1", e.g. "n". So, the first portion comprises "n" sub-portions, each structured as described above, wherein an input token reference is changed from sub-portion to sub-portion. In other words, the first sub-portion of the first portion comprises the command, the first input token reference of that secure transaction unit and all output token references of all transaction units, the second sub-portion of the first portion comprises the command, the second input token reference of that secure transaction unit and all output token references of all transaction units, and so on.

In another embodiment, a first digital signature is generated by the secure transaction unit only on the modification-command, an input token reference related to the token of the secure transaction unit and an output token reference related to the token of the other secure transaction unit. Prior generating the common registration request, the secure transaction units involved in the common token transaction share the necessary token references. The transaction unit may add the generated signature to the common registration request prior sending it to a token reference register. In addition or alternatively, a second digital signature is generated by the other secure transaction unit on the other modification-command, an input token reference related to the token of the other secure transaction unit and an output token reference related to the token of the secure transaction unit. Prior generating the common registration request, the secure transaction units involved in the common token transaction share the necessary token references. The other transaction unit may add the generated signature to the common registration request prior sending it to a token reference register. So, the common registration request is signed in a linked manner to proof its knowledge for increasing security. Here, each secure transaction unit may generate a signature for own input token references and the output token reference from the other secure transaction unit. The other secure transaction unit may provide its generated signature to the secure transaction unit. The transaction unit may add the generated and the received signature to the common registration request prior sending the request to a token reference register.

In another embodiment, a first digital signature is generated by the secure transaction unit only on the other modification-command and all input token references related to the tokens of the secure transaction unit. Prior generating the common registration request, the secure transaction units involved in the common token transaction share the necessary token references. The transaction unit may add the generated signature to the common registration request prior sending it to a token reference register. In addition or alternatively, a second digital signature is generated by the other secure transaction unit only on the modification-command and an all input token references related to the tokens of the other secure transaction unit. Prior generating the common registration request, the secure transaction units involved in the common token transaction share the necessary token references. The other transaction unit may add the generated signature to the common registration request prior sending it to a token reference register. So, the modification commands of the common registration request are signed in a linked manner to proof its knowledge for increasing security. Here, each secure transaction unit generates its signature for all input token references within the common registration request. The other secure transaction unit may provide its generated second signature to the secure transaction unit. The transaction unit may add the generated and the received signature to the common registration request prior sending the request to a token reference register.

In another embodiment, a first digital signature is generated by the secure transaction unit only on the other modification-command, all input token references, and all output token references related to the tokens of the secure transaction unit. Alternatively and or additionally, a second digital signature is generated by the other secure transaction unit only on the modification-command, an all input token references and all output token references related to the tokens of the other secure transaction unit. The other secure transaction unit may provide its generated second signature to the secure transaction unit. The transaction unit may add the generated and the received signature to the common registration request prior sending the request to a token reference register. So, the modification commands of the common registration request are signed in a linked manner to proof its knowledge for increasing security. Here, each secure transaction unit generates a signature for all its own input token references and all its output token references within the common registration request.

In an embodiment it may be possible that the secure transaction unit negotiates the token-type that should be used for the subsequent payment. Based on the negotiation result between two secure transaction units, the tokens of a prioritized token-type are exchanged. If needed, tokens of one token-type may be swapped with tokens of another token-type prior performing the token exchange to ensure that tokens with the correct or desired or most-preferred token-type information is used for the token exchange.

For such a negotiation, the secure transaction unit may comprise preferences that may be predefined by the user or the service provider unit. So, it may be initially set-up in the secure transaction unit that tokens with a specific token-type information should be used with a higher priority than token with another token-type information. For instance, it may be predefined that sending of tokens should be performed with a first token-type information but receiving of tokens should or can be performed with tokens of a second token-type information, that is different from the first token-type information.

A negotiation as indicated above may be a part in each payment transaction, e.g., upon request to exchange token between two participants in the payment system. The negotiation may be initiated prior the exchange of the token. In case, the two participants in the payment system know each other, such a negotiation may not be repeated after a successful token transaction for a subsequent token transaction, for instance if the subsequent token transaction is initiated within a predefined timeframe, e.g. within one day or one week or one month.

Such a negotiation may comprise a first negotiation step in which a token-type information setup information is exchanged between the secure transaction units of the individual participants of the transaction. After this first negotiation step, each participant knows the preferred token-type information setup of the other participant(s).

In a second step of the negotiation, the token-sending secure transaction unit is configured to collect the information of tokens available in the token storage.

In a third step of the negotiation, the token-sending secure transaction unit provides a suggestion about the intended (preferred) tokens to be send. In this third step, the token-sending transaction unit may already consider the token-type information from the token-receiving secure transaction unit.

In a fourth step of the negotiation, the token-receiving secure transaction unit may transfer an accept-information to the token-sending secure transaction unit to indicate that the suggestion is accepted. Alternatively, the token-receiving secure transaction unit is configured to collect information of tokens available in the token storage to provide a counter-suggestion, for instance if a more preferred token exchange with tokens having different token-type information is more appropriate when considering the information about the token-type information from the token-sending transaction unit.

At the end of the negotiation both participants indicated their agreement to a token exchange with tokens of a special token-type. The token to be exchanged may preferably all be of one token-type to reduce efforts on the token-receiving transaction unit.

The negotiation may be dependent on conditions defined by individual service provider units, such as an expiry date of a token, a number of tokens to be transferred within a certain timeframe in order to receive special conditions with the financial service provider unit, a monetary value to be transferred within a certain timeframe in order to receive special discounts with the financial service provider unit, or the like.

In an embodiment, the secure transaction unit is a secure element that is operatively connected to an electronic equipment of a participant in the electronic payment system.

In an embodiment, the secure transaction unit is a secure wallet that is hosted at a service provider unit.

The control means may be configured to access a token storage, preferably a token storage of the secure transaction unit.

The secure transaction unit may comprise a token storage as a physical entity. The secure transaction unit may be configured to access the token storage. The token storage may be a token vault of this secure transaction unit. Each secure transaction unit in the transaction system may comprise its own token storage.

From such token storage accessible by the secure transaction unit, each token can be transferred to any other secure transaction unit, e.g., owned by a customer of the secure transaction unit.

The secure transaction unit may be a secure wallet that may be a hardware security module built in hardware or software to enable tamperproof and secure access to the tokens.

In another aspect of the invention, a token reference register for registering of token of an electronic payment transaction system is provided.

The token reference register comprises one or more storage units for storing token references for registering tokens in the electronic payment transaction system. Each token comprises at least a monetary value, a private key of a token-individual key pair, and a token-type information as token elements.

The token reference register further comprises one or more verification units for verifying whether the token reference of a receive registration request is stored in the token reference register.

Each stored token reference in the token reference register comprises the monetary value of the token, a public key corresponding to the private key of the token-individual key pair, and the token-type information of the assigned token as token reference element. Each token reference being uniquely assigned to a token.

The storage unit is further configured to store token references of modified tokens based on a modification command (as part of a registration request), preferably a switch-command, a merge-command, and/or a split-command, wherein a token reference of the modification command is stored only in a case all tokens involved in the modification command comprise the same token-type information.

The token reference register is configured to - in a first mode - process single registration requests comprising only single modification-commands concerning a modification of a token of the secure transaction unit.

The token reference register is configured to - in a second mode - to process common registration requests.

In a first version, the common registration request comprises more than one modification-command, wherein a modification-command of a common registration request is related to a modification of a token of another secure transaction unit and wherein another modification-command of the common registration request is related to a modification of a token of the secure transaction unit.

In a second version, the common registration request comprises one modification-command, one or more token references related to a modification of a token of the secure transaction unit, and one or more token references related to a modification of a token from another secure transaction unit.

The token reference register is a unit of the electronic payment transaction system that stores token references, whereby the associated tokens are registered. This token reference register can be a central database or storage unit of the electronic payment transaction system. This token reference register may be a decentralized ledger, for example in a blockchain topology. The token reference register may maintain a history of token references and/or registration requests.

The basic principle of registering a token is that a received registration request is verified by the token reference register to see whether the token reference assigned to the token is already known in the token reference register. If the token reference is already known, it is not stored again. If the token reference is not known, it is entered (stored) in the token reference register to be available for future verification and check steps in the secure payment transaction system.

A token reference is stored only once in the token reference register. Since a token reference of a token exists only once in the transaction system, the verifying unit can determine whether an attempt was made to spend a token more than once.

The token reference comprises the monetary value of the uniquely assigned token. This monetary value can be used to further validate the registration request at the token reference register.

In the verifying unit it may additionally be determined whether the token reference of the received registration request can be assigned to a token of the electronic payment transaction system. For this purpose, the token reference or a derivative of the token reference or a history for the token reference must be stored in the token reference register, which can be assigned to the token reference of the received registration request.

It may additionally or alternatively be determined by the verifying unit of the token reference register whether the received registration request is syntactically correct, e.g. by validating a digital signature of the registration request. This is used, for example, to check whether the registration request is plausible, whether a command type was correctly specified in the registration request, whether the token uniquely assigned to the token reference exists (can exist); and/or whether a difference of monetary values of tokens in the registration request matches a command type specified in the registration request.

In one embodiment, the verifying unit is configured to determine whether a signature of the registration request is correct.

In a further aspect there is provided an electronic payment transaction system that comprises: a secure token issuing unit that comprises a minting unit configured to generate a new token to be issued in the electronic transaction system; and a melting unit configured to delete tokens to be deleted from the electronic transaction system; a plurality of secure transaction units as described above; and one or more token register for registering the tokens of the electronic transaction system as described above.

In a further aspect there is provided a method for registering of token in a token reference register as described above.

The use of a token reference is not comparable to the use of addresses of subscriber entities in a blockchain-based transaction system, as no addresses of subscriber entities are used in the token reference register according to the invention to prevent traceability of the tokens.

In one embodiment, the received registration request is signed with the private key of the token-individual key pair to be able to check or verify a unique assignment of the token reference to the token. If the verification in the verifying unit is successful, i.e., the signature can be verified, then the sender of the registration request must be in possession of or must be aware of the token. This makes it possible to detect a fraud attempt with non-existent tokens or unauthorized generated tokens.

The use of multiple verification units enables parallel processing of registration requests and speeds up registration in the transaction system. The verification unit(s) compares, for example, a command type of the received registration request with the token values of the received registration request. If a command type is expected not to add token values to or subtract token values from the transaction system, it verifies that this is met with the token values of the received token references. If verification fails, fraud is detected, and a (wrong) registration is prevented.

In an embodiment, the token reference register may comprise a new-registration unit for registering of one or more new tokens that are created by a token issuer or for registering of one or more old tokens that are deleted by the token issuer. In this new-registration unit of the token reference register, newly generated tokens and deleted tokens can be entered. With the new-registration unit, a reference value concerning the total monetary value of all valid (active) tokens located in the transaction system can be updated based on the generated and/or deleted tokens in the token reference register (for example, in a checking unit thereof). For example, if a new token is generated, its monetary value is added to the total monetary value of all valid (active) tokens. If, for example, a token is deleted, its monetary value is subtracted from the total monetary value of all valid (active) tokens.

In one embodiment, the token reference register comprises an evaluating unit for checking a sum of all monetary values concerning the received registration request. This evaluating unit compares the received registration request with a data stock of the storage unit(s) and checks in particular a total monetary value of all valid (active) tokens for change due to the registration request. In this way, the validity of the monetary value can be checked to determine whether a new token value has been generated in an unauthorized manner. This could also be used to check old registration requests and their success, this registration request history could be used to process without loading the memory unit of the token reference register, registration requests sent twice.

In one embodiment, the registration request concerns a split of a token and preferably the registration request has a token reference of the token to be split and a token reference of each of the (at least two) split tokens. The token references contained in the registration request can be concatenated. Splitting is a modification of a token, with which a monetary value of a token can be split into at least two (smaller) monetary values. This makes it possible to reduce the monetary value and to react to a transaction request more accurately to the monetary value. Thus, the origin token that is split becomes invalid and the (at least two) split tokens are registered in the token reference register to become verifiable in the transaction system.

Alternatively or additionally, splitting provides for: Generating a new private key of a token individual key pair for a first split token; applying a hash function on the private key to obtain a hash value for the first split token; generating a new private key of a token individual key pair for a second split token; applying the hash function to obtain a hash value for the second split token; splitting the monetary value into a first monetary partial value and into a second monetary partial value, taking into account that the sum of the first monetary partial value and the second monetary partial value corresponds to the monetary value of the token to be split; generating a token reference for the first split token comprising the first monetary partial value and the hash value of the first split token; generating a token reference for the second split token comprising the second monetary partial value and the hash value of the second split token; and generating the registration request using the token reference of the token to be split, the token reference for the first split token, and the token reference for the second split token.

In one embodiment, the registration request relates to a switch of a token and preferably the registration request has a token reference of the token to be switched. The switching of the token is a further modification possibility. The token references contained in the registration request may be concatenated. If a token is transferred directly from one transaction unit to another transaction unit, for example if the monetary value is to be transferred as a monetary value as part of a payment transaction, the receiving transaction unit can now have the token value re-registered to itself. This registers the switch in the token reference register.

When transferring a token between two transaction units, these two transaction units have knowledge of the same token at the same time. To prevent the sending transaction unit from also using the token with another (third) transaction unit (so-called multiple spending of tokens), a switch of the transmitted token from the first transaction unit to the second transaction unit is preferably executed. The switch can preferably be performed automatically when a token is received in the second transaction unit.

Alternatively, or additionally, the switching provides for: Generating a new private key of a token individual key pair; applying a hash function on the private key to obtain a hash value as a token reference; generating the registration request using the token reference for the token to be switched and the token reference for the switched token.

The monetary value of the token to be switched corresponds to the monetary value of the switched token. Thus, when switching, a token with the same monetary value but new private key is registered with the token reference register.

In one embodiment, the registration request concerns a merging of at least two tokens, and preferably the registration request has a token reference of the merged token and a token reference of each of the tokens to be merged. The token references contained in the registration request can be merged by concatenation. The merge is a modification possibility at a token, with which two token values are merged. This makes it possible to merge two monetary values into one monetary value in order to react to a transaction request with monetary value accuracy. Thus, both tokens to be merged become invalid and the merged token is registered in the token reference register to become checkable in the transaction system.

Alternatively or additionally, when merging, it is provided for: Generating a new private key of a token-individual key pair; applying a hash function to obtain hash value as token reference of the merged token; calculating the monetary value for the merged token by forming the sum of the respective monetary values of the at least two tokens to be merged; generating a token reference for the merged token comprising the calculated monetary value and the hash value for the merged token; and generating the registration request using each token reference of the tokens to be merged and the token reference for the merged token.

In one embodiment, a registration request is sent by a secure issuing unit, wherein the registration request concerns a creating of a token or a deletion of a token.

Each combination as named herein may be referred to as a concatenation, which is a logical combination used in information technology.

In a further aspect, a non-transitory computer readable storage medium for tangibly storing computer program instructions capable of being executed by a processor is described. The computer program instructions defining the steps the method as described above.

Each token comprises a monetary value as a first token element. The monetary value may be a data that represents money usable in one or more electronic payment transaction.

Each token further comprises a private key as a second token element. The private key may be referred to as a blinding value (e.g. obfuscation amount) or may be a random number or may be a secret that is not known to participants not involved in a transaction. The private key may be a private key of a token-individual key pair.

In addition, each token may have further token elements as outlined below and may also have further token elements such as further metadata, e.g., currency data that indicates the currency which the monetary amount represents and/or validity data and/or timestamp data. Token of different token-type may have the same currency data, thus they may belong to the same currency.

The token may also be referred to as value note within this disclosure. The token can be used in online and offline payment transactions. The token may represent central bank digital currency, CBDC.

The token may comprise one or more token-individual history entries as a further token element. One history entry may represent one modification, such as SWITCH, SPLIT, MERGE, performed with this token. Such a further token element may also be referred to as history data.

It is possible to use tokens exclusively in offline electronic payment transactions between two directly communicating secure token managing units (e.g., secure elements) within the electronic payment transaction system.

An online electronic payment transaction payment is defined herein as a transaction in which a secure wallet (e.g. in a secure element) that participates in the transaction, e.g. the secure wallet that initiates the token transfer (payer) or the secure wallet that receives a token (payee), has access and can communicate with one or more remote instances of the electronic payment system, such as a token register, a transaction register, a token issuing unit, a service provider unit such as financial service provider (FSP) via classical internet or mobile communication means or any other suitable online communication protocol. So, immediately before, while or after performing the transaction, also a registration of the transaction by storing a respective token reference in a remote token register is performed by one of the secure wallets involved in the transaction.

An offline electronic payment transaction payment is defined herein as a direct transaction between two secure wallets (e.g. residing in secure elements) that participate in the transaction, e.g. the secure wallet that initiates the token transfer (payer) and/or the secure wallet that receives a token (payee). At least one of payer or payee has no access and cannot communicate with remote instances of the transaction system, such as a token register, a transaction register, a token issuing unit and/or a service provider unit, such as financial service provider (FSP) via classical internet or mobile communication means. The token transfer may then take place by local wireless communication means, such as Bluetooth, NFC, or any other suitable wireless communication protocol. The token transfer may also take place by contact-based communication means, such as USB, ISO 7816, or any other suitable contact-based communication protocol.

For a registration of a token in the token register, a token reference of the token may be generated. Each token reference comprises a hash value as a token reference element and may further have the monetary value of the token as another token reference element.

A token "managed by" a token transaction unit, such as the above described secure wallets, is a token that resides in a memory (storage) space. The memory space can be an internal memory space of the token management unit, or it can be an external memory space to which the token management unit has exclusive access rights. This memory space can include a remote memory space, such as a cloud memory (storage) space.

Implementation of modifications to tokens can be performed with the known payment transactions of WO 2020/212 337 A1; WO 2020/212 331 A1; WO 2021 /170 646 A1 and WO 2021 / 170 645 A1 protocols.

A corresponding token reference is (uniquely) associated with each token in the method and payment transaction system. Knowledge of a token reference does not authorize issuing of the digital money represented by the token. This represents a key difference between token references and tokens. A token reference is unique and also uniquely associated with one token, so there is a 1-to-1 relationship between the token and the token reference. The token reference can be computed by each participant, such as a secure wallet (e.g. in a secure element) of a participant in the electronic payment system. The computing is preferably performed by the control means.

In the following, the invention or further embodiments and advantages of the invention are explained in more detail based on drawings, wherein the drawings describe only embodiments of the invention. Identical components in the drawings are given the same reference signs. Elements drawn with dashed lines are considered as optional elements.

The drawings are not to be regarded as true to scale, and individual elements of the drawings may be shown in exaggeratedly large or exaggeratedly simplified form.

Fig. 1 shows an exemplary embodiment of a secure electronic payment transaction system for token transactions with secure transaction units in a first mode according to the invention.

Fig. 2a shows an exemplary embodiment of a secure electronic payment transaction system for token transactions with secure transaction units in a second mode of a first version according to the invention.

Fig. 2b shows an exemplary embodiment of a secure electronic payment transaction system for token transactions with secure transaction units in a second mode of a second version according to the invention.

Fig. 3a shows an overview of commands for tokens according to the invention.

Fig. 3b shows an overview of signed registration requests for the commands according to the invention.

Fig. 3c shows an overview of different implementations (structures) of signatures used for common registration requests according to the invention.

Fig. 4 shows another exemplary embodiment of a secure electronic payment transaction system for token transactions with secure transaction units according to the invention.

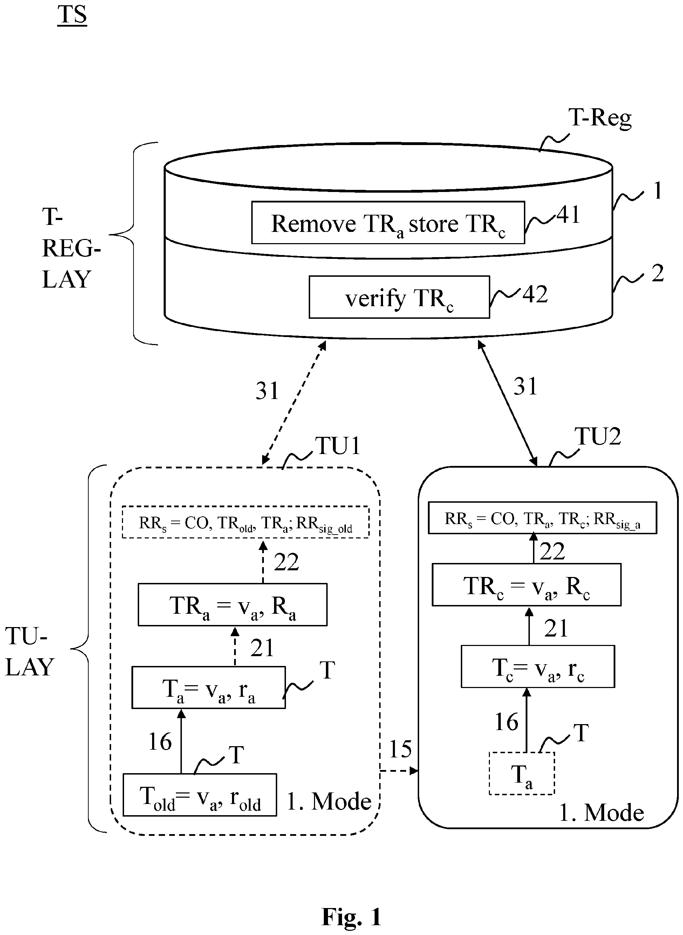

Fig. 1 shows an embodiment example of a secure electronic payment transaction system TS with secure transaction units TU in a first operating mode according to the invention according to the invention. The transaction system TS comprises a register layer T-REG-LAY in which a token reference register T-Reg is arranged. The TS further comprises a direct transaction layer TU-LAY in which a plurality of transaction units TU may be provided, as an example, two transaction units TU1 and TU2 are shown in Fig. 1. In Fig. 1, the TU1 and the TU2 are in a first operating mode. In this first operating mode, control means of the TU are configured to generate single registration requests $RR_s$ that comprise only single modification-commands CO concerning a modification of a token, here $T_a$ of the secure transaction unit TU1 and $T_c$ of the secure transaction unit TU2.

The transaction units TU of the transaction system TS are arranged to exchange 15 tokens T directly with each other. In the case of Fig. 1, $T_{old}$, $T_a$ and $T_c$ are payment tokens, which are also referred to as digital coins. Each token T in the TS is generated by a transaction unit TU-I of a specific token issuer (not shown in Fig. 1).

Each token T can be modified, such as split, merged or switched, by applying modification-commands CO by each transaction unit TU.

Each token T can be generated by a transaction unit TUI of a token issuer and can also be deleted. A transaction unit TU-I of a token issuer is, for example, a commercial bank.

Modification-commands are compliant with the above described third approach and it is refrained from repeating these modifications here again. Each modification can be registered in the T-Reg by replacement requests (registration requests) RR.

A token T is uniquely represented by a monetary value v as well as a random number r. Thus, each token T in this TS has at least two token elements.

The monetary value v as a first mandatory token element can be specified in a range of values from 1 to $2^{31}-1$. The random number r may be a number in the range of 0 to $2^{256} - 1$, i.e., the order of an elliptic curve, for example secp256r1. For example, the token value v is a 32-bit token element of type integer.

The random number r as a second mandatory token element is a private key of a token-individual key pair. The random number r is unique and secret in the transaction system TS and may not be published or reused. The generation of the random number r must be unpredictable. For example, the random number r is a 32-Byte token element of type integer.

A transaction unit TU has exclusive access to a storage unit (vault) or includes a token memory in a data store of the transaction units TU.

A token T may be stored as a TLV encoded record in a token store and then has a unique tag and length information, for example, in the following format.

For each token T, a token reference TR can be stored in the token reference register T-Reg. The token reference TR comprises the monetary value v (of the token T) and a public key R that corresponds to the private key r of the token-individual key pair. The token reference TR of the token T can be viewed at any time in the register T-Reg of the transaction system TS.

TU1 is in possession of $T_{old}$ that comprises a monetary value $v_a$ as well as a random number $r_{old}$. TU1 switches $T_{old}$ to $T_a$ with a switch-modification in step 16. $T_a$ comprises the monetary value $v_a$ (of the $T_{old}$) as well as a newly generated random number $r_a$. In step 21, the TU1 generates a $TR_a$ that is uniquely assigned to the $T_a$.

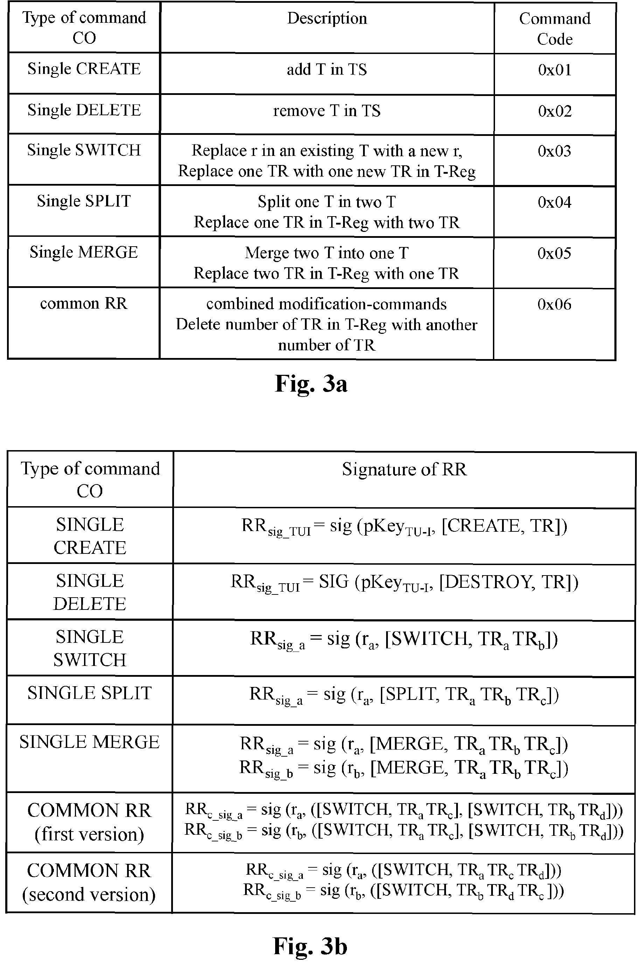

This token reference $TR_a$ can be sent 31 to the token reference register T-Reg in form of a single registration request $RR_s$ if the TU is in the first mode (being generated in step 22), if necessary, together with a command CO (see overview in Figs. 3a and 3b).

Additionally, the single registration request $RR_s$ is signed with the private key $r_{old}$. Signing makes it possible to verify that TU1 is in possession/knowledge of the token $T_{old}$, further enhancing security in the transaction system TS.

The single registration request $RR_s$ generated 22 in TU1 relating to a switch-modification in Fig. 1 includes the modification command CO, the output token references $TR_a$ of token $T_a$ to be registered and the input token reference $TR_{old}$ of the token $T_{old}$ to be removed from the token reference register T-Reg. The single registration request $RR_s$ also comprises a signed registration request $RR_{sig\_old}$, which is the RR that is signed with the private part $r_{old}$ of the token $T_{old}$.

This $RR_s$ may be sent to T-Reg in step 31 to register $TR_a$ in the T-Reg. Every TU in the TS that receives the token $T_a$ from TU1 can now verify whether $T_a$ is a valid token T in the TS.

The token $T_a$ (and maybe also $TR_a$ and/or the $RR_s$ e.g. as a proof) may be transmitted 15 from TU1 to TU2. TU2 now performs a switch-modification to switch the token $T_a$ from TU1 to become a token $T_c$ of TU2. Therefore, a new random number $r_c$ is generated at TU2 in step 16. However, $v_a$ remains the same token element also in the new $T_c$. A token reference $TR_c$ is generated based on $T_c$ in step 21 by TU2. Since $v_a$ is not changed, no money has been generated or deleted.

This token reference $TR_c$ can be sent 31 to T-Reg as another single registration request $RR_s$ if the TU2 is in the first mode (being generated in step 22), together with a command CO (see overview in Figs. 3a and 3b).

Additionally, the $RR_s$ is signed with the private key $r_a$. Signing makes it possible to verify that TU2 is in possession of the (old) token $T_a$, further enhancing security in the TS.

The single registration request $RR_s$ generated 22 in TU2 relating to the switch-modification includes the switch-modification command CO, one output token reference $TR_c$ of a token $T_c$ to be registered and one input token reference $TR_a$ of the token $T_a$ to be removed from the token reference register T-Reg. The single registration request $RR_s$ also comprises a signed registration request $RR_{sig\_a}$, which is the RR that is signed with the private part $r_a$ of the token $T_a$.

Each TU may store the $RR_s$ as a so-called PROOF in case, no data connection to the T-Reg is available or is not desired, e.g. in an offline token transaction.

$RR_s$ are sent 31 to the T-Reg. $RR_s$ is received in the T-Reg. After $RR_s$ has been checked (step 42) by the T-Reg, the $TR_a$ is removed from the T-Reg and $TR_c$ is stored in the T-Reg in step 41. The $TR_c$ replaces the $TR_a$ so, the $RR_s$ can also be referred to as single replacement requests. With storing the $TR_c$, the token $T_c$ is registered in the TS.

Each TR is uniquely assigned to a T in the TS and the TR is used to register T in the TS. The TR is therefore the public representation of T from the direct transaction layer TU-LAY. Sole knowledge or possession of the TR alone does not allow the T to be transferred and is not equivalent to the TU being in possession of the T. The TR is used to prevent multiple spending attempts and checks whether token values v have been generated in an improper manner. Therefore, the TR and, if applicable, the history (the proofs) about the tokens T and the RR from TU(s) are stored in the T-Reg.

T may be stored, for example, in a secure wallet, as the TU. These wallets are, for example, software applications within a terminal device in which the TU is operationally embedded. A wallet may be set up as an application on a smartphone, smartcard or payment terminal. The wallet is used to securely manage tokens T of the TU, generate token references TR, modify tokens T, and/or exchange tokens T. Wallets are used to communicate with the token reference register T-Reg, generate registration requests RR to the token reference register T-Reg, modify tokens T (switch, merge, split) and/or perform transaction of token T to another TU.

As expressed earlier, a transaction within the TU-Lay does not require a communication link to the T-Reg of the TS. The TS is set up to perform a transaction offline, i.e., without a communication link to the T-Reg. A corresponding registration of token T may therefore be temporally downstream of a transfer of token T to a TU.

The T-Reg is a unit of the transaction system TS and is either a central register or database of the transaction system TS or a decentralized register or database (DLT) of the transaction system TS.

The public part R of the token individual key pair (as part of the TR) is generated by applying a cryptographic function to the private part r of the token individual key pair. This function is difficult to reverse and thus provides the transaction system TS with the required security. It holds that $R = r * G$, where G can be, for example, a global parameter of the transaction system TS, e.g., a generator point of an elliptic curve, here the secp256r1 curve. Any other suitable cryptographic function to receive the R value can be applied as well.

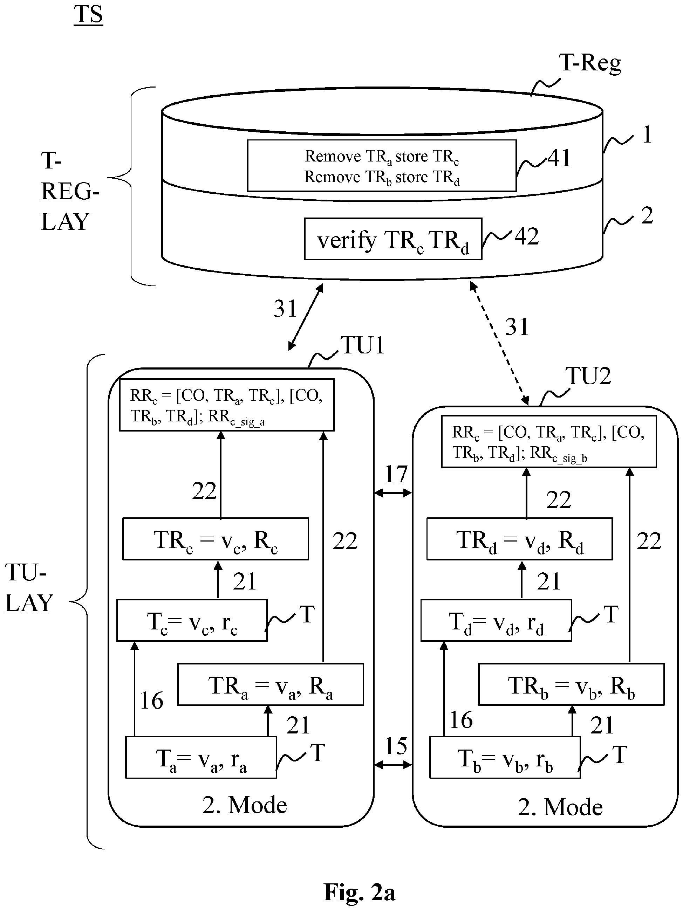

Fig. 2a shows an embodiment example of a secure electronic payment transaction system TS with secure transaction units TU in a second operating mode according to a first version of the invention. All elements shown in Fig. 2a and described with reference to Fig. 2a are identical to corresponding elements of Fig. 1 with same reference signs unless otherwise stated.

Here, in contrast to Fig. 1, the TU1 and the TU2 are in a second operating mode. In this second operating mode, control means of the TU are configured to generate and/or process common registration requests $RR_c$ that comprise more than one modification-command, wherein at least one modification-command of a common registration request $RR_c$ is related to a modification of a token $T_c$ of TU2 and wherein another modification-command of the common registration request $RR_c$ is related to a modification of a token $T_a$ of the TU1.

Similar to Fig. 1, also in Fig. 2a, the TU1 has a token $T_a$ that is switched to a new token $T_c$. For both tokens $T_a$ and $T_c$, the respective token references $TR_a$ and $TR_c$ are generated in respective steps 21.

The TU2 has a token $T_c$ that is switched to a new token $T_d$. For both tokens $T_b$ and $T_d$, the respective token references $TR_b$ and $TR_d$ are generated in respective steps 21.

In contrast to Fig. 1, in Fig. 2a a common registration request $RR_c$ is generated in step 22 in each TU independently. For that, TU1 receives the switch-modification including $TR_b$ and $TR_d$ from TU2 in step 17. For that, TU2 receives the switch-modification including $TR_a$ and $TR_c$ from TU1.

In step 22, each of TU1 and TU2 signs both switch-modifications to receive $RR_{sig\_a}$ and $RR_{sig\_b}$.

In particular, TU1 signs its own switch-modification with input token reference $TR_a$ and output token reference $TR_c$ and the switch-modification of TU2 with input token reference $TR_b$ and output token reference $TR_d$ with the private key $r_a$ of token $T_a$ to receive the value $RR_{c\_sig\_a}$. This $RR_c$ of TU1 comprising both switch commands and the signed switch commands $RR_{c\_sig\_a}$ is send to the T-Reg in step 31.

Furthermore, TU2 signs its own switch-modification with input token reference $TR_b$ and output token reference $TR_d$ and the switch-modification of TU1 with received input token reference $TR_a$ and received output token reference $TR_c$ with the private key $r_b$ of token $T_b$ to receive the value $RR_{c\_sig\_b}$. This $RR_c$ of TU2 comprising both switch commands and the signed switch commands $RR_{c\_sig\_b}$ is send to the T-Reg in step 31.

Here, the T-Reg receives both $RR_c$ in independently in step 31. After $RR_c$ has been checked (step 42) by the T-Reg, the $TR_a$ is removed from the T-Reg and $TR_c$ is stored in the T-Reg in step 41 and the $TR_b$ is removed from the T-Reg and $TR_d$ is stored in the T-Reg in step 41. Both $RR_c$ enable that $TR_c$ replaces the $TR_a$ (switch in TU1) and $TR_d$ replaces the $TR_b$ (switch in TU2 ) and so, the $RR_c$ can also be referred to as common replacement requests. With storing the $TR_c$ and $TR_d$, the tokens $T_c$ and $T_d$ are both registered in the TS.

The T-Reg may recognize the difference between $RR_s$ and $RR_c$ by a specific data element in an RR and/or by a signal from the individual TU that it is now in second mode and thus, generates and processes only common registration request.

By receiving the common $RR_c$ that includes more than one modification-command, the T-Reg knows that another $RR_c$ needs to be received, too before both modification-commands are registered in the T-Reg.

In an alternative variant of the first version of the second mode, the TU2 does not send the signed $RR_{c\_sig\_b}$ to the T-Reg in step 31 but instead forwards the signed $RR_{c\_sig\_b}$ to the TU1, e.g. also during step 17. The TU1 sends the $RR_c$ together with signed $RR_{c\_sig\_b}$ to the T-Reg.

In this second operating mode, it is the goal that a modification requires modification commands from two distinct transaction units TU and both modification commands are linked together and must be performed together to register both modifications at once. If one of the RR cannot be executed or verified in the T-Reg, the entire (overall) modification from both TU1 and TU2 fails. The processing of the common registration requests may be performed as an atomic operation.

Fig. 2a may be implemented in a payment transaction between TU1 and TU2. Assuming that the payment transaction involves the transfer of 16 € from TU1 to TU2. For that TU1 transfers token $T_b$ to TU2 in step 15. However, $T_b$ has $v_b$ of 20 € and so, it does not represent the correct monetary value for the payment transaction. Thus, TU2 returns

$T_a$ with $v_a$= 4€ (also) in step 15 representing the change-money to fit the correct payment transaction. To secure this payment transaction that involves two token exchanges, the common registration request is now used. The entire payment transaction is valid only, if both TU1 and TU2 provide a common registration request RR to the T-Reg and the T-Reg verifies and stores the respective TR as explained above.

Fig. 2a may alternatively be implemented in an agent-token-change transaction between TU1 and TU2. Assuming that TU1 receives a token that has a large history data set, namely a high number of proofs as explained above - used in offline token transactions to protocol the modifications made on the token. To reduce computation time and avoid unnecessary data transfer amounts, it changes this token against a token with no history data. So, in step 15 $T_b$ (with many proofs) is sent from TU1 to TU2 and in return, $T_a$ (with no proofs) is sent from TU2 to TU1. The entire token-change-transaction is valid only, if both TU1 and TU2 provide a common registration request RR to the T-Reg and the T-Reg verifies and stores the respective TR as explained above.

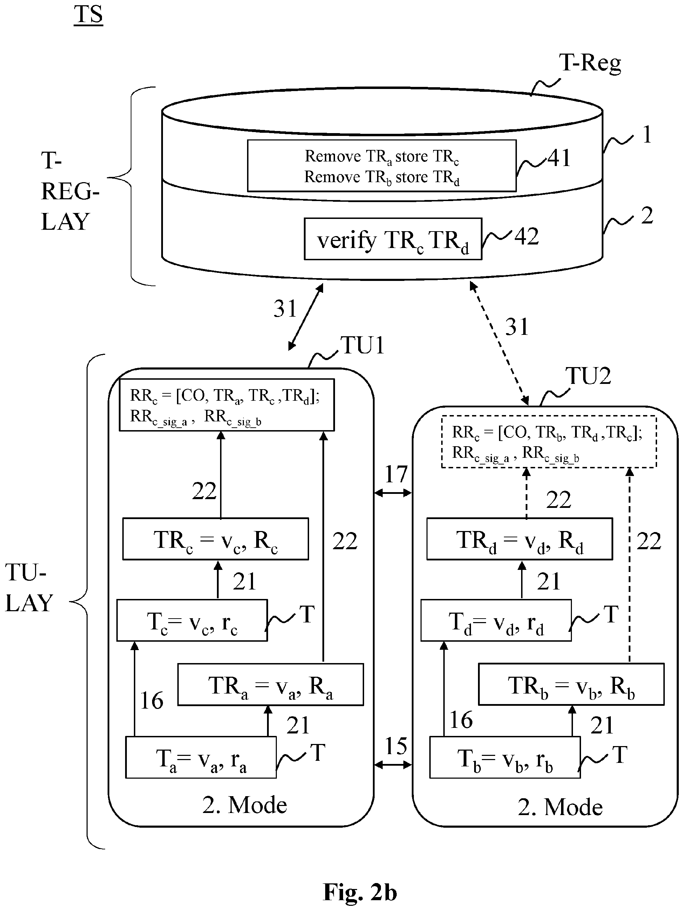

Fig. 2b shows an embodiment example of a secure electronic payment transaction system TS with secure transaction units TU in a second operating mode according to a second version of the invention. All elements shown in Fig. 2b and described with reference to Fig. 2b are identical to corresponding elements of Fig. 1 or Fig. 2a with same reference signs unless otherwise stated.

In this second version of the second operating mode, control means of the TU are configured to generate and/or process common registration requests $RR_c$ that comprises one modification-command CO, one or more token references $TR_a$, $TR_c$ related to a modification of tokens $T_a$, $T_c$ of the TU1, and one or more token references $TR_b$, $TR_d$ related to a modification of $T_b$, $T_d$ from TU2. Here, the common registration request $RR_c$ of TU1 comprises one input token reference $TR_a$, the output token reference $TR_c$ and the output token reference $TR_d$ from TU2, received in step 17.

Also in Fig. 2b, the TU1 has a token $T_a$ that is switched to a new token $T_c$. For both tokens $T_a$ and $T_c$, the respective token references $TR_a$ and $TR_c$ are generated in respective steps 21.

The TU2 has a token $T_c$ that is switched to a new token $T_d$. For both tokens $T_b$ and $T_d$, the respective token references $TR_b$ and $TR_d$ are generated in respective steps 21.

In contrast to Fig. 2a, in Fig. 2b only one common registration request $RR_c$ is generated in step 22. If it is generated in TU1, TU1 receives (at least) the output token reference $TR_d$ from TU2 in step 17. If it is generated in TU2, TU2 receives (at least) the output token reference $TR_c$ from TU2 in step 17.

In step 22, TU1 and TU2 signs the switch-modification to receive $RR_{sig\_a}$ and $RR_{sig\_b}$ respectively.

In particular, TU1 signs the switch-modification with input token reference $TR_a$ and output token reference $TR_c$ and output token reference $TR_d$ with the private key $r_a$ of token $T_a$ to receive the value $RR_{c\_sig\_a}$.

Furthermore, TU2 signs the switch-modification with input token reference $TR_b$ and output token reference $TR_d$ and received output token reference $TR_c$ with the private key $r_b$ of token $T_b$ to receive the value $RR_{c\_sig\_b}$.

If TU1 sends in step 31 the common registration request $RR_c$, it prior receives $RR_{c\_sig\_b}$ from TU2 and adds it to the $RR_c$.

If - alternatively or additionally - TU2 sends in step 31 the common registration request $RR_c$, it prior receives $RR_{c\_sig\_a}$ from TU1 and adds it to the $RR_c$.

The T-Reg receives the $RR_c$ in step 31. After $RR_c$ has been checked (step 42) by the T-Reg, the $TR_a$ is removed from the T-Reg and $TR_c$ is stored in the T-Reg in step 41 and the $TR_b$ is removed from the T-Reg and $TR_d$ is stored in the T-Reg in step 41. The $RR_c$ enables that $TR_c$ replaces the $TR_a$ (switch in TU1) and $TR_d$ replaces the $TR_b$ (switch in TU2 ) and so, the $RR_c$ can also be referred to as common replacement requests. With storing the $TR_c$ and $TR_d$, the tokens $T_c$ and $T_d$ are both registered in the TS.

The T-Reg may recognize the difference between $RR_s$ and $RR_c$ by a specific data element in an RR and/or by a signal from the individual TU that it is now in second mode and thus, generates and processes only common registration request.

By receiving the common $RR_c$, the T-Reg knows that more than one modification is to be registered.

In this second operating mode, it is the goal that more than one modification commands are somehow linked together and must be performed together to register both modifications at once. If one of the RR cannot be executed or verified in the T-Reg, the entire (overall) modification from both TU1 and TU2 fails. The processing of the common registration requests may be performed as an atomic operation.

In Fig. 3a an overview of commands CO is shown, which can be executed at a token T. The commands CO can be modifications of an existing token T, for example "switch", "split" or "merge" that are used in replacement requests RR 310. The commands CO can also concern the creation (=create) of a token T that is used in a creation request 311 or the deletion (=destroy) of existing tokens T that is used in a deletion request 312. Furthermore, according to this invention it is now possible to combine token modifications of that should be processed together, such as two-switches for money-change-payment transactions or the agent-token-replacement. Fig. 3a command codes are given as examples (0x01 to 0x06), which can then be part of a registration request RR. So, the T-Reg is signaled with command code 0x06 that a combined RR is now received.

The commands "switch", "merge", "split" can be integrated into single replacement requests (single registration requests RR) to register a single modification of a token T made from a single TU in the T-Reg.

In contrast to Fig. 3a, these replacement requests RR that include the commands "switch", "merge", "split" may have the same command code that indicates a single registration request.

Fig. 3b shows an overview of commands CO and their signed registration request syntax $RR_{sig}$. Input tokens T and input token references $TR_{in}$ are "consumed" per command CO. Thereby output tokens T output token references $TR_{out}$ are "generated" per command CO.

A replacement request RR has the basic structure of the following three elements: Command type CO, input token reference(s) $TR_{in}$, output token reference(s) $TR_{out}$.

Each command CO has a characteristic number of input token reference(s) ("inputs") and output token reference(s) ("outputs").

Each single $RR_s$ comprises an integer number of input token references $TR_{in}$ and an integer number of output token references $TR_{out}$.

For a single switch-modification, the integer number of input token references $TR_{in}$ and the integer number of output token references $TR_{out}$ is identical and is "1".

For a single merge-modification, the integer number of input token references $TR_{in}$ is "2"and the integer number of output token references $TR_{out}$ is "1".

For a single split-modification, the integer number of input token references $TR_{in}$ is "1"and the integer number of output token references $TR_{out}$ is "2".

For a common registration request $RR_c$, the integer number of input token references $TR_{in}$ and the integer number of output token references $TR_{out}$ can be different and can be any integer number.

For a common switch-modification, the integer number of input token references $TR_{in}$ and the integer number of output token references $TR_{out}$ is identical and is "2".

It should be noted that for the single commands CO "split", "switch" "merge", and "common RR", the difference of the token values v of input tokens T to the token values v of output tokens must equal "zero".

Furthermore, it should be noted that for the single commands CO "split", "switch" "merge", and "common RR", the difference of the token values v of input token references TR to the token values v of output tokens must equal "zero".

In other words, these commands CO "Split", "Switch", "Merge", and "common RR" do not generate any token values v and do not destroy any token values v. This can be verified at the command type CO itself or also by the verifying unit 2 of the token reference register T-Reg and is a check criterion for a registration request RR.

It should also be noted that only for the commands CO "Create" and "Delete" a difference of the token values v of input tokens T to the token values v of output tokens can be different than "zero", but only in the amount of the token value v of the token T and not beyond.

Each registration request RR is signed to be able to verify that the sending TU of the token reference TR is also in possession of the associated token T. An ECDSA scheme can be applied as signature. The registration request RR is preferably signed with the private part r of the token T.

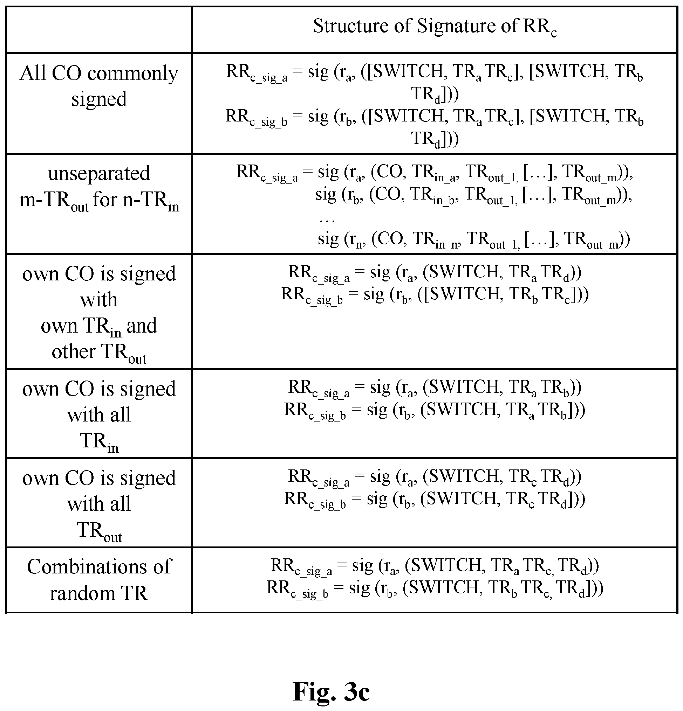

However, there are different implementations to sign the common registration requests and they are shown in Fig. 3c. The structure of the signature is explained in general terms and also when applied to the embodiment of Fig. 2.

As indicated in Fig. 2a, the two switch-modifications are commonly signed by each of the TU1 and TU2. This is repeated in the first line of Fig. 3c and refers to the first version of common registration requests.

According to last line of Fig. 3b or the second to last line of Fig. 3c, the second version of common registration requests is shown. The common registration request $RR_c$ can also be seen as a transform-command, in which an integer number n of input token references $TR_{in}$ are transformed to another integer number m of output token references $TR_{out}$. This transformation may be executed atomically.

A useful format for the $RR_c$ would be:

```
Payload = COMMON-RR, TR_In1, TR_In2, [...], TR_inn, TR_out1, TR_out2, [...], TR_outm
```

A useful format for the digital would be:

```
sig = Payload, sig(r1, Payload), sig(r2, Payload), [...]
```

In the implementation as shown in the second line of Fig. 3c, the signature could be split, like:

```
sig = Payload, sig(r₁, Payload₁), sig(r₂, Payload₂), [...], sig(rₙ, 
                                   Payloadₙ),
```

with

$$Payload_1 = COMMON-RR, \; TR_{in1}, \; TR_{out1}, \; TR_{out2}, \; [...] \; TR_{outm}$$
$$Payload_2 = COMMON-RR, \; TR_{in2}, \; TR_{out1}, \; TR_{out2}, \; [...] \; TR_{outm}$$
$$...$$
$$Payload_n = COMMON-RR, \; TR_{inn}, \; TR_{out1}, \; TR_{out2}, \; [...] \; TR_{outm}$$

Thus, a first digital signature sig is applied by the TU1 on the modification-command, one input token reference $TR_{in}$ related to the tokens T of the secure transaction unit TU1, all output token references $TR_{out}$ related to the tokens T of the secure transaction unit TU1, and all output token references $TR_{out}$ related to the tokens T of the other secure transaction unit TU2. Additionally or alternatively, a second digital signature is applied by the other secure transaction unit TU on the other modification-command, one input token reference $TR_{in}$ related to the tokens T of the other secure transaction unit TU, all output token references $TR_{out}$ related to the tokens T of the secure transaction unit TU1, and all output token references $TR_{out}$ related to the tokens T of the other secure transaction unit TU2. So, output token references $TR_{out}$ are not separated. Either the first signature or the second signature or both signatures are added to the common registration request.

In the implementation as shown in the third line of Fig. 3c, the signature $RR_{c\_sig\_a}$ of the TU1 comprises all own $TR_{in}$ - applied to the embodiment of Fig. 2, this is only $TR_a$ - and all $TR_{out}$ from TU2 - applied to the embodiment of Fig. 2, this is only $TR_d$.

Further shown in the implementation as shown in the third line of Fig. 3c, the signature $RR_{c\_sig\_b}$ of the TU2 comprises all own $TR_{in}$ - applied to the embodiment of Fig. 2, this is only $TR_b$ - and all $TR_{out}$ from TU2 - applied to the embodiment of Fig. 2, this is only $TR_c$.

In the implementation as shown in the fourth line of Fig. 3c, the signature $RR_{c\_sig\_a}$ of the TU1 comprises all $TR_{in}$ - applied to the embodiment of Fig. 2, this is $TR_a$ and $TR_b$. Further shown in the implementation as shown in the fourth line of Fig. 3c, the signature $RR_{c\_sig\_b}$ of the TU2 comprises all $TR_{in}$ - applied to the embodiment of Fig. 2, this is $TR_a$ and $TR_b$.

In the implementation as shown in the fifth line of Fig. 3c, the signature $RR_{c\_sig\_a}$ of the TU1 comprises all $TR_{out}$ - applied to the embodiment of Fig. 2, this is $TR_c$ and $TR_d$. Further shown in the implementation as shown in the fifth line of Fig. 3c, the signature $RR_{c\_sig\_b}$ of the TU2 comprises all $TR_{out}$ - applied to the embodiment of Fig. 2, this is $TR_c$ and $TR_d$.

In the implementation as shown in the last line of Fig. 3c, the signature $RR_{c\_sig\_a}$ of the TU1 comprises a randomly chosen combination of $TR_{in}$ and $TR_{out}$ - applied to the embodiment of Fig. 2, this is $TR_a$, $TR_c$ and $TR_d$. Further shown in the implementation as shown in the last line of Fig. 3c, the signature $RR_{c\_sig\_b}$ of the TU2 comprises a randomly chosen combination of $TR_{in}$ and $TR_{out}$ - applied to the embodiment of Fig. 2, this is $TR_a$, $TR_c$ and $TR_d$.

In another implementation - not illustrated in Fig. 3c - a first portion of the digital signature is applied by the secure transaction unit TU1 only on the modification-command, all input token references $TR_{in}$ and all output token references $TR_{out}$ related to the tokens T of the secure transaction unit TU. A second portion of the digital signature is applied by the other secure transaction unit TU2 only on the modification-command, an all input token references ($TR_{in}$) and all output token references $TR_{out}$ related to the tokens T of the other secure transaction unit TU2.

In another implementation - not illustrated in Fig. 3c - a first portion of the digital signature is applied by the secure transaction unit TU1 only on the other modification-command of the common registration request $RR_c$ related to the modification of the token T of the secure transaction unit TU1. A second portion of the digital signature is applied by the other secure transaction unit TU2 only on the modification-command of the common registration request $RR_c$ related to the modification of the token T of the other secure transaction unit TU1.

For signed registration requests of the command types CO "Create" and "Delete", a further signature of a transaction unit of a token issuer TU-I is required to ensure that these commands have been generated by a privileged entity of the transaction system TS.

As expressed earlier, the command types CO "Create", "Delete", "Split", "Switch" and "Merge" can be studied in WO 2020 / 212 331 A1 and WO 2020 / 212 331 A1 and it is avoided to repeat the functions or structure thereof.

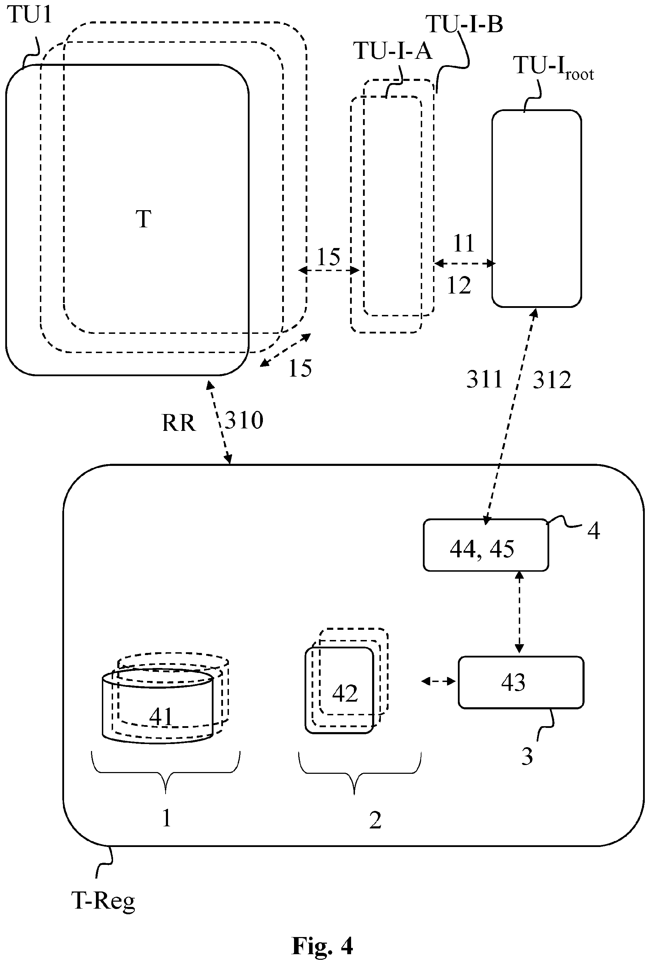

Fig. 4 shows another embodiment of a token reference register T-Reg of a transaction system TS.

In Fig. 4, it is indicated that a plurality of TU-I-A TU-I-B exists that may all receive root tokens from a root token issuer TU-I$_{root}$, e.g. a central bank. Tokens may be newly issued 11 or deleted 12.

These new tokens may be issued to intermediate issuers, such as commercial banks TU-I-A and TU-I-B. Here, token-type information may or may not be added and these tokens may be used in direct token exchange 15.

In Fig. 4 it is shown that a plurality of storage units 1 may be provided in the token reference register T-Reg to accelerate the storing 41 of a plurality of token references TR. Here, it is further indicated that a plurality of verification units 2 may be provided in the token reference register T-Reg to accelerate the verifying 42 of registration requests RR.

REFERENCE SIGNS

| | |
|---|---|
| TS | Electronic (payment) transaction system |
| TU | Transaction unit in TS, wallet |
| TU-I | Transaction unit of token issuer |
| T-Reg | Token reference register |
| | 1 Storage unit |
| | 2 Verifying unit |
| | 3 Evaluating v-sum unit |
| | 4 New-registration unit |
| | |
| T-Reg-LAY | Token registration layer |
| TU-LAY | Token transfer layer |
| RR$_s$ | Single registration request, replacement request |
| RR$_c$ | Common registration request, replacement request |
| T | Token |
| TR | Token reference |
| TR$_{in}$ | Input Token reference |
| TR$_{out}$ | Output Token reference |
| v | Monetary value of T |
| r | Secret, private key of token-individual key pair |
| R | public key of token-individual key pair |
| CO | Command |
| sig | Signature |
| n | integer number of TR$_{in}$ |
| m | integer number of TR$_{out}$ |
| 11 | new token issued |
| 12 | old tokens deleted |
| 14 | negotiate token-type |
| 15 | transfer of token |
| 16 | Modify token |
| 17 | Transfer of token reference |
| 21 | Generate token reference |
| 22 | Generate RR |
| 31 | registration request |
| | 310 replacement request |
| | 311 creation request |
| | 312 destruction request |
| | |
| 41 | Replace TR by remove TR and store TR |
| 42 | Verify TR |

**Claims**

1. A secure transaction unit (TU) for managing payment transactions in an electronic payment transaction system (TS), the secure transaction unit (TU) comprising:

- means for exchanging one or more tokens (T) with other secure transaction units (TU) in the electronic payment transaction system (TS); and
- means for transmitting registration requests (RR) to a token reference register (T-Reg) of the electronic transaction system (TS) for registering the tokens (T) in the electronic payment transaction system (TS);
- control means configured to:

in a first mode, generate single registration requests ($RR_s$) comprising only single modification-commands concerning a modification of a token (T) of the secure transaction unit (TU); and
in a second mode, generate and/or process common registration requests ($RR_c$) comprising more than one modification-command, wherein a modification-command of a common registration request ($RR_c$) is related to a modification of a token (T) of another secure transaction unit (TU) and wherein another modification-command of the common registration request ($RR_c$) is related to a modification of a token (T) of the secure transaction unit (TU).

2. A secure transaction unit (TU) for managing payment transactions in an electronic payment transaction system (TS), the secure transaction unit (TU) comprising:

- means for exchanging one or more tokens (T) with other secure transaction units (TU) in the electronic payment transaction system (TS); and
- means for transmitting registration requests (RR) to a token reference register (T-Reg) of the electronic transaction system (TS) for registering the tokens (T) in the electronic payment transaction system (TS);
- control means configured to:

in a first mode, generate single registration requests ($RR_s$) comprising only single modification-commands concerning a modification of one or more tokens (T) of the secure transaction unit (TU); and
in a second mode, generate and/or process common registration requests ($RR_c$), wherein a common registration request ($RR_c$) comprising one modification-command, one or more token references (TR) related to a modification of a token (T) of the secure transaction unit (TU), and one or more token references (TR) related to a modification of a token (T) from another secure transaction unit (TU).

3. The secure transaction unit (TU) according to claim 1 or 2,

- wherein each common registration request ($RR_c$) comprises token references (TR),
- wherein each token reference (TR) being uniquely assigned to one token (T),
- wherein each token (T) assigned to token references (TR) of common registration requests ($RR_c$) comprises at least a monetary value (v) and a private key (r) of a token-individual key pair as token elements,
- wherein each token reference (TR) comprising a monetary value (v) of the assigned token (T) and a public key (R) corresponding to the private key (r) of the token-individual key pair as token reference elements.

4. The secure transaction unit (TU) of one of the preceding claims, wherein the common registration request ($RR_c$) comprises:

- a first switch-command on a first token (T) having first token-type information to obtain a third token (T) having a monetary value (v) of the first token (T) and the first token-type information; and/or
- a second switch-command on a second token (T) having second token-type information to obtain a fourth token (T) having the monetary value (v) of the second token (T).

5. The secure transaction unit (TU) according to any of the preceding claims, wherein processing the common registration requests ($RR_c$) requires a signing of the common registration request ($RR_c$) with a digital signature being generated by the secure transaction unit and/or the other secure transaction unit, preferably the generation being made commonly or independent.

6. The secure transaction unit (TU) according to claim 5, wherein the digital signature is commonly applied on the modification-command of the common registration request ($RR_c$) related to the modification of the token (T) of the other secure transaction unit (TU) and on the other modification-command of the common registration request ($RR_c$) related to the modification of the token (T) of the secure transaction unit (TU).

7. The secure transaction unit (TU) according to claim 5, wherein a first digital signature is generated by the secure transaction unit (TU) on the modification-command of the common registration request ($RR_c$) and the one or more token references (TR) related to the modification of the token (T) of the secure transaction unit (TU) and

wherein a second digital signature is generated by the other secure transaction unit (TU) on the modification-command of the common registration request ($RR_c$) and the one or more token references (TR) related to the modification of the token (T) of the other secure transaction unit (TU).

8. The secure transaction unit (TU) according to claim 5, wherein a first digital signature is generated by the secure transaction unit (TU) on the modification-command, one input token reference ($TR_{in}$) related to the tokens (T) of the secure transaction unit (TU) and all output token references ($TR_{out}$) related to the tokens (T) of the secure transaction unit (TU), and all output token references ($TR_{out}$) related to the tokens (T) of the other secure transaction unit (TU); and/or

wherein a second digital signature is generated by the other secure transaction unit (TU) on the other modification-command, one input token reference ($TR_{in}$) related to the tokens (T) of the other secure transaction unit (TU), all output token references ($TR_{out}$) related to the tokens (T) of the secure transaction unit (TU), and all output token references ($TR_{out}$) related to the tokens (T) of the other secure transaction unit (TU).

9. The secure transaction unit (TU) according to claim 5, wherein a first digital signature is generated by the secure transaction unit (TU) only on the modification-command, an input token reference ($TR_{in}$) related to the token (T) of the secure transaction unit (TU) and an output token reference ($TR_{out}$) related to the token (T) of the other secure transaction unit (TU); and/or

wherein a second digital signature is applied by the other secure transaction unit (TU) only on the other modification-command, an input token reference ($TR_{in}$) related to the token (T) of the other secure transaction unit (TU) and an output token reference ($TR_{out}$) related to the token (T) of the secure transaction unit (TU).

10. The secure transaction unit (TU) according to claim 5, wherein a first digital signature is generated by the secure transaction unit (TU) only on the modification-command and all input token references ($TR_{in}$) related to the tokens (T) of the secure transaction unit (TU); and/or

wherein a second digital signature is applied by the other secure transaction unit (TU) only on the modification-command and an all input token references ($TR_{in}$) related to the tokens (T) of the other secure transaction unit (TU).

11. The secure transaction unit (TU) according to claim 5, wherein a first digital signature is applied by the secure transaction unit (TU) only on the modification-command, all input token references ($TR_{in}$) and all output token references ($TR_{out}$) related to the tokens (T) of the secure transaction unit (TU); and/or

wherein a second digital signature is applied by the other secure transaction unit (TU) only on the modification-command, all input token references ($TR_{in}$) and all output token references ($TR_{out}$) related to the tokens (T) of the other secure transaction unit (TU).

12. A token reference register (T-Reg) for registering of token (T) of an electronic payment transaction system (TS), the token reference register (T-Reg) comprising:

- one or more storage units (1) for storing token references (TR) for registering tokens (T) in the electronic payment transaction system (TS), wherein each token (T) comprises at least a monetary value (v), a private key (r) of a token-individual key pair, and a token-type information as token elements;
- one or more verifying units (2) for verifying whether the token reference (TR) of a received registration request (RR) is stored in the token reference register (T-Reg);
- wherein each stored token reference (TR) in the token reference register (T-Reg) comprises the monetary value (v) of the token (T), a public key (R) corresponding to the private key (r) of the token-individual key pair, and the token-type information of the assigned token (T) as token reference elements, and
- wherein each token reference (TR) being uniquely assigned to a token (T)
- the token reference register being configured to:

in a first mode, process single registration requests ($RR_s$) comprising only single modification-commands concerning a modification of a token (T) of the secure transaction unit (TU); and
in a second mode, process common registration requests ($RR_c$) comprising:

o more than one modification-command, wherein a modification-command of a common registration request ($RR_c$) is related to a modification of a token (T) of another secure transaction unit (TU) and wherein another modification-command of the common registration request ($RR_c$) is related to a modification of a token (T) of the secure transaction unit (TU); or

◦ one modification-command, one or more token references (TR) related to a modification of a token (T) of the secure transaction unit (TU), and one or more token references (TR) related to a modification of a token (T) from another secure transaction unit (TU).

13. The token reference register (T-Reg) according to claim 12, wherein the storage unit is further configured to store token references (TR) of modified tokens (T) based on a modification command, preferably a switch-command, a merge-command, and/or a split-command, wherein a token reference (TR) of the modification command is stored only in a case all tokens (T) involved in the modification command comprise the same token-type information.

14. An electronic payment transaction system (TS) comprising:
a secure token issuing unit (CB) comprising:

- a minting unit (MU) configured to generate a new token to be issued in the electronic transaction system (TS); and
- a melting unit configured to delete tokens to be deleted from the electronic transaction system (TS);
- a plurality of secure transaction units (TU) according to one of the claims 1 to 11; and
- one or more token register (T-Reg) for registering the tokens (T) of the electronic transaction system (TS) according to claim 12 or 13.

15. A method for registering of token (T) in a token reference register (T-Reg) according to one of the claims 12 or 13.


**Amended claims in accordance with Rule 137(2) EPC.**

1. A secure transaction unit (TU) for managing payment transactions in an electronic payment transaction system (TS), the secure transaction unit (TU) comprising:

- means for exchanging one or more tokens (T) with other secure transaction units (TU) in the electronic payment transaction system (TS); and
- means for transmitting registration requests (RR) to a token reference register (T-Reg) of the electronic transaction system (TS) for registering the tokens (T) in the electronic payment transaction system (TS);
- control means configured to:

in a first mode, generate single registration requests ($RR_s$) comprising only single modification-commands concerning a modification of a token (T) of the secure transaction unit (TU);
**characterized by**
in a second mode, generate and/or process a common registration request ($RR_c$) comprising more than one modification-command, wherein a modification-command of the common registration request ($RR_c$) is related to a modification of a token (T) of another secure transaction unit (TU) and wherein another modification-command of the common registration request ($RR_c$) is related to a modification of a token (T) of the secure transaction unit (TU).

2. A secure transaction unit (TU) for managing payment transactions in an electronic payment transaction system (TS), the secure transaction unit (TU) comprising:

- means for exchanging one or more tokens (T) with other secure transaction units (TU) in the electronic payment transaction system (TS); and
- means for transmitting registration requests (RR) to a token reference register (T-Reg) of the electronic transaction system (TS) for registering the tokens (T) in the electronic payment transaction system (TS);
- control means configured to:

in a first mode, generate single registration requests ($RR_s$) comprising only single modification-commands concerning a modification of one or more tokens (T) of the secure transaction unit (TU);
**characterized by**
in a second mode, generate and/or process a common registration request ($RR_c$) comprising one modification-command, one or more token references (TR) related to a modification of a token (T) of the secure transaction unit (TU), and one or more token references (TR) related to a modification of a token (T) from another secure transaction unit (TU).

3. The secure transaction unit (TU) according to claim 1 or 2,

   - wherein the common registration request (RR$_c$) comprises token references (TR),
   - wherein each token reference (TR) being uniquely assigned to one token (T),
   - wherein each token (T) assigned to token references (TR) of the common registration request (RR$_c$) comprises at least a monetary value (v) and a private key (r) of a token-individual key pair as token elements,
   - wherein each token reference (TR) comprising a monetary value (v) of the assigned token (T) and a public key (R) corresponding to the private key (r) of the token-individual key pair as token reference elements.

4. The secure transaction unit (TU) of one of the preceding claims, wherein the common registration request (RR$_c$) comprises:

   - a first switch-command on a first token (T) having first token-type information to obtain a third token (T) having a monetary value (v) of the first token (T) and the first token-type information; and/or
   - a second switch-command on a second token (T) having second token-type information to obtain a fourth token (T) having the monetary value (v) of the second token (T).

5. The secure transaction unit (TU) according to any of the preceding claims, wherein processing the common registration request (RR$_c$) requires a signing of the common registration request (RR$_c$) with a digital signature being generated by the secure transaction unit and/or the other secure transaction unit, preferably the generation being made commonly or independent.

6. The secure transaction unit (TU) according to claim 5, wherein the digital signature is commonly applied on the modification-command of the common registration request (RR$_c$) related to the modification of the token (T) of the other secure transaction unit (TU) and on the other modification-command of the common registration request (RR$_c$) related to the modification of the token (T) of the secure transaction unit (TU).

7. The secure transaction unit (TU) according to claim 5, wherein a first digital signature is generated by the secure transaction unit (TU) on the modification-command of the common registration request (RR$_c$) and the one or more token references (TR) related to the modification of the token (T) of the secure transaction unit (TU) and
   wherein a second digital signature is generated by the other secure transaction unit (TU) on the modification-command of the common registration request (RR$_c$) and the one or more token references (TR) related to the modification of the token (T) of the other secure transaction unit (TU).

8. The secure transaction unit (TU) according to claim 5, wherein a first digital signature is generated by the secure transaction unit (TU) on the modification-command, one input token reference (TR$_{in}$) related to the tokens (T) of the secure transaction unit (TU) and all output token references (TR$_{out}$) related to the tokens (T) of the secure transaction unit (TU), and all output token references (TR$_{out}$) related to the tokens (T) of the other secure transaction unit (TU); and/or
   wherein a second digital signature is generated by the other secure transaction unit (TU) on the other modification-command, one input token reference (TR$_{in}$) related to the tokens (T) of the other secure transaction unit (TU), all output token references (TR$_{out}$) related to the tokens (T) of the secure transaction unit (TU), and all output token references (TR$_{out}$) related to the tokens (T) of the other secure transaction unit (TU).

9. The secure transaction unit (TU) according to claim 5, wherein a first digital signature is generated by the secure transaction unit (TU) only on the modification-command, an input token reference (TR$_{in}$) related to the token (T) of the secure transaction unit (TU) and an output token reference (TR$_{out}$) related to the token (T) of the other secure transaction unit (TU); and/or
   wherein a second digital signature is applied by the other secure transaction unit (TU) only on the other modification-command, an input token reference (TR$_{in}$) related to the token (T) of the other secure transaction unit (TU) and an output token reference (TR$_{out}$) related to the token (T) of the secure transaction unit (TU).

10. The secure transaction unit (TU) according to claim 5, wherein a first digital signature is generated by the secure transaction unit (TU) only on the modification-command and all input token references (TR$_{in}$) related to the tokens (T) of the secure transaction unit (TU); and/or
   wherein a second digital signature is applied by the other secure transaction unit (TU) only on the modification-command and an all input token references (TR$_{in}$) related to the tokens (T) of the other secure transaction unit (TU).

**11.** The secure transaction unit (TU) according to claim 5, wherein a first digital signature is applied by the secure transaction unit (TU) only on the modification-command, all input token references ($TR_{in}$) and all output token references ($TR_{out}$) related to the tokens (T) of the secure transaction unit (TU); and/or

wherein a second digital signature is applied by the other secure transaction unit (TU) only on the modification-command, all input token references ($TR_{in}$) and all output token references ($TR_{out}$) related to the tokens (T) of the other secure transaction unit (TU).

**12.** A token reference register (T-Reg) for registering of token (T) of an electronic payment transaction system (TS), the token reference register (T-Reg) comprising:

- one or more storage units (1) for storing token references (TR) for registering tokens (T) in the electronic payment transaction system (TS), wherein each token (T) comprises at least a monetary value (v), a private key (r) of a token-individual key pair, and a token-type information as token elements;
- one or more verifying units (2) for verifying whether the token reference (TR) of a received registration request (RR) is stored in the token reference register (T-Reg);
- wherein each stored token reference (TR) in the token reference register (T-Reg) comprises the monetary value (v) of the token (T), a public key (R) corresponding to the private key (r) of the token-individual key pair, and the token-type information of the assigned token (T) as token reference elements, and
- wherein each token reference (TR) being uniquely assigned to a token (T)
- the token reference register being configured to:

  in a first mode, process single registration requests ($RR_s$) comprising only single modification-commands concerning a modification of a token (T) of the secure transaction unit (TU);
  **characterized by**
  in a second mode, process a common registration request ($RR_c$) comprising:

  o more than one modification-command, wherein a modification-command of the common registration request ($RR_c$) is related to a modification of a token (T) of another secure transaction unit (TU) and wherein another modification-command of the common registration request ($RR_c$) is related to a modification of a token (T) of the secure transaction unit (TU); or
  ◦ one modification-command, one or more token references (TR) related to a modification of a token (T) of the secure transaction unit (TU), and one or more token references (TR) related to a modification of a token (T) from another secure transaction unit (TU).

**13.** The token reference register (T-Reg) according to claim 12, wherein the storage unit is further configured to store token references (TR) of modified tokens (T) based on a modification command, preferably a switch-command, a merge-command, and/or a split-command, wherein a token reference (TR) of the modification command is stored only in a case all tokens (T) involved in the modification command comprise the same token-type information.

**14.** An electronic payment transaction system (TS) comprising:
a secure token issuing unit (CB) comprising:

- a minting unit (MU) configured to generate a new token to be issued in the electronic transaction system (TS); and
- a melting unit configured to delete tokens to be deleted from the electronic transaction system (TS);
- a plurality of secure transaction units (TU) according to one of the claims 1 to 11; and
- one or more token register (T-Reg) for registering the tokens (T) of the electronic transaction system (TS) according to claim 12 or 13.

**15.** A method for registering of token (T) in a token reference register (T-Reg) according to one of the claims 12 or 13.

TS

**Fig. 1**

**Fig. 2a**

TS

**Fig. 2b**

| Type of command CO | Description | Command Code |
|---|---|---|
| Single CREATE | add T in TS | 0x01 |
| Single DELETE | remove T in TS | 0x02 |
| Single SWITCH | Replace r in an existing T with a new r, Replace one TR with one new TR in T-Reg | 0x03 |
| Single SPLIT | Split one T in two T Replace one TR in T-Reg with two TR | 0x04 |
| Single MERGE | Merge two T into one T Replace two TR in T-Reg with one TR | 0x05 |
| common RR | combined modification-commands Delete number of TR in T-Reg with another number of TR | 0x06 |

## Fig. 3a

| Type of command CO | Signature of RR |
|---|---|
| SINGLE CREATE | $RR_{sig\_TUI} = sig\,(pKey_{TU\text{-}I}, [CREATE, TR])$ |
| SINGLE DELETE | $RR_{sig\_TUI} = SIG\,(pKey_{TU\text{-}I}, [DESTROY, TR])$ |
| SINGLE SWITCH | $RR_{sig\_a} = sig\,(r_a, [SWITCH, TR_a\,TR_b])$ |
| SINGLE SPLIT | $RR_{sig\_a} = sig\,(r_a, [SPLIT, TR_a\,TR_b\,TR_c])$ |
| SINGLE MERGE | $RR_{sig\_a} = sig\,(r_a, [MERGE, TR_a\,TR_b\,TR_c])$ <br> $RR_{sig\_b} = sig\,(r_b, [MERGE, TR_a\,TR_b\,TR_c])$ |
| COMMON RR (first version) | $RR_{c\_sig\_a} = sig\,(r_a, ([SWITCH, TR_a\,TR_c], [SWITCH, TR_b\,TR_d]))$ <br> $RR_{c\_sig\_b} = sig\,(r_b, ([SWITCH, TR_a\,TR_c], [SWITCH, TR_b\,TR_d]))$ |
| COMMON RR (second version) | $RR_{c\_sig\_a} = sig\,(r_a, ([SWITCH, TR_a\,TR_c\,TR_d]))$ <br> $RR_{c\_sig\_b} = sig\,(r_b, ([SWITCH, TR_b\,TR_d\,TR_c]))$ |

## Fig. 3b

| | Structure of Signature of $RR_c$ |
|---|---|
| All CO commonly signed | $RR_{c\_sig\_a} = sig\ (r_a, ([SWITCH, TR_a\ TR_c], [SWITCH, TR_b\ TR_d]))$ <br> $RR_{c\_sig\_b} = sig\ (r_b, ([SWITCH, TR_a\ TR_c], [SWITCH, TR_b\ TR_d]))$ |
| unseparated m-$TR_{out}$ for n-$TR_{in}$ | $RR_{c\_sig\_a} = sig\ (r_a, (CO, TR_{in\_a}, TR_{out\_1}, [\ldots], TR_{out\_m})),$ <br> $sig\ (r_b, (CO, TR_{in\_b}, TR_{out\_1}, [\ldots], TR_{out\_m})),$ <br> $\ldots$ <br> $sig\ (r_n, (CO, TR_{in\_n}, TR_{out\_1}, [\ldots], TR_{out\_m}))$ |
| own CO is signed with own $TR_{in}$ and other $TR_{out}$ | $RR_{c\_sig\_a} = sig\ (r_a, (SWITCH, TR_a\ TR_d))$ <br> $RR_{c\_sig\_b} = sig\ (r_b, ([SWITCH, TR_b\ TR_c]))$ |
| own CO is signed with all $TR_{in}$ | $RR_{c\_sig\_a} = sig\ (r_a, (SWITCH, TR_a\ TR_b))$ <br> $RR_{c\_sig\_b} = sig\ (r_b, (SWITCH, TR_a\ TR_b]))$ |
| own CO is signed with all $TR_{out}$ | $RR_{c\_sig\_a} = sig\ (r_a, (SWITCH, TR_c\ TR_d))$ <br> $RR_{c\_sig\_b} = sig\ (r_b, (SWITCH, TR_c\ TR_d]))$ |
| Combinations of random TR | $RR_{c\_sig\_a} = sig\ (r_a, (SWITCH, TR_a\ TR_c, TR_d))$ <br> $RR_{c\_sig\_b} = sig\ (r_b, (SWITCH, TR_b\ TR_c, TR_d]))$ |

## Fig. 3c

**Fig. 4**

Europäisches
Patentamt

European
Patent Office

Office européen
des brevets

# EUROPEAN SEARCH REPORT

Application Number

EP 23 17 6530

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2021 004019 A1 (GIESECKE DEVRIENT ADVANCE52 GMBH [DE]) 9 February 2023 (2023-02-09) * paragraphs [0135] – [0237] * * pages 1-8 * | 1-15 | INV. G06Q20/06 G06Q20/36 G06Q20/38 |
| A | DE 10 2021 004023 A1 (GIESECKE DEVRIENT ADVANCE52 GMBH [DE]) 9 February 2023 (2023-02-09) * paragraph [0111] – paragraph [0159] * * figures 1-6 * | 1-15 | |
| A | US 2015/032625 A1 (DILL MATTHEW [US] ET AL) 29 January 2015 (2015-01-29) * paragraph [0041] – paragraph [0042] * | 4,12,13 | |
| A | US 2018/034642 A1 (KAEHLER ADRIAN [US]) 1 February 2018 (2018-02-01) * paragraph [0004] * | 5-11 | |

TECHNICAL FIELDS SEARCHED (IPC)

G06Q
G07G

The present search report has been drawn up for all claims

| Place of search | Date of completion of the search | Examiner |
|---|---|---|
| The Hague | 7 November 2023 | Nicoli, Félix |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 17 6530

This annex lists the patent family members relating to the patent documents cited in  the above-mentioned European search report.
The members are as contained in the European Patent Office EDP file on
The European Patent Office is in no way liable for these particulars which are merely given for the purpose of information.

07-11-2023

| Patent document cited in search report | Publication date | Patent family member(s) | | Publication date |
|---|---|---|---|---|
| DE 102021004019 A1 | 09-02-2023 | DE | 102021004019 A1 | 09-02-2023 |
| | | WO | 2023011761 A1 | 09-02-2023 |
| DE 102021004023 A1 | 09-02-2023 | DE | 102021004023 A1 | 09-02-2023 |
| | | WO | 2023011755 A1 | 09-02-2023 |
| US 2015032625 A1 | 29-01-2015 | AU | 2014292980 A1 | 04-02-2016 |
| | | AU | 2014293042 A1 | 11-02-2016 |
| | | AU | 2018260860 A1 | 22-11-2018 |
| | | AU | 2019201056 A1 | 07-03-2019 |
| | | AU | 2021200807 A1 | 04-03-2021 |
| | | CA | 2918788 A1 | 29-01-2015 |
| | | CA | 2919199 A1 | 29-01-2015 |
| | | CN | 105580038 A | 11-05-2016 |
| | | CN | 105874495 A | 17-08-2016 |
| | | CN | 113469670 A | 01-10-2021 |
| | | CN | 115567273 A | 03-01-2023 |
| | | EP | 3025292 A1 | 01-06-2016 |
| | | EP | 3025293 A1 | 01-06-2016 |
| | | JP | 6518244 B2 | 22-05-2019 |
| | | JP | 6738731 B2 | 12-08-2020 |
| | | JP | 6845274 B2 | 17-03-2021 |
| | | JP | 7209031 B2 | 19-01-2023 |
| | | JP | 2016532951 A | 20-10-2016 |
| | | JP | 2016535517 A | 10-11-2016 |
| | | JP | 2019106212 A | 27-06-2019 |
| | | JP | 2021093195 A | 17-06-2021 |
| | | JP | 2023036964 A | 14-03-2023 |
| | | KR | 20160035028 A | 30-03-2016 |
| | | RU | 2016105768 A | 28-08-2017 |
| | | RU | 2016105772 A | 29-08-2017 |
| | | SG | 10201800626R A | 27-02-2018 |
| | | SG | 10201800629W A | 27-02-2018 |
| | | SG | 11201600427R A | 26-02-2016 |
| | | SG | 11201600520Q A | 26-02-2016 |
| | | US | 2015032625 A1 | 29-01-2015 |
| | | US | 2015032626 A1 | 29-01-2015 |
| | | US | 2015032627 A1 | 29-01-2015 |
| | | US | 2018285864 A1 | 04-10-2018 |
| | | US | 2020410483 A1 | 31-12-2020 |
| | | US | 2022172199 A1 | 02-06-2022 |
| | | WO | 2015013522 A1 | 29-01-2015 |
| | | WO | 2015013548 A1 | 29-01-2015 |
| US 2018034642 A1 | 01-02-2018 | AU | 2017302345 A1 | 31-01-2019 |
| | | AU | 2022200824 A1 | 03-03-2022 |

EPO FORM P0459

For more details about this annex : see Official Journal of the European Patent Office, No. 12/82

page 1 of 2

**ANNEX TO THE EUROPEAN SEARCH REPORT
ON EUROPEAN PATENT APPLICATION NO.**                    EP 23 17 6530

This annex lists the patent family members relating to the patent documents cited in the above-mentioned European search report.
The members are as contained in the European Patent Office EDP file on
The European Patent Office is in no way liable for these particulars which are merely given for the purpose of information.

07-11-2023

| Patent document cited in search report | Publication date | Patent family member(s) | | Publication date |
|---|---|---|---|---|
| | | CA | 3032282 A1 | 01-02-2018 |
| | | CN | 110383756 A | 25-10-2019 |
| | | CN | 116599732 A | 15-08-2023 |
| | | EP | 3491480 A1 | 05-06-2019 |
| | | EP | 4138339 A1 | 22-02-2023 |
| | | IL | 264400 A | 28-02-2019 |
| | | IL | 280982 A | 29-04-2021 |
| | | IL | 294128 A | 01-08-2022 |
| | | JP | 6851458 B2 | 31-03-2021 |
| | | JP | 7136954 B2 | 13-09-2022 |
| | | JP | 2019522432 A | 08-08-2019 |
| | | JP | 2021103884 A | 15-07-2021 |
| | | JP | 2022172265 A | 15-11-2022 |
| | | KR | 20190032548 A | 27-03-2019 |
| | | KR | 20230062672 A | 09-05-2023 |
| | | KR | 20230110831 A | 25-07-2023 |
| | | US | 2018034642 A1 | 01-02-2018 |
| | | US | 2020044864 A1 | 06-02-2020 |
| | | US | 2021281425 A1 | 09-09-2021 |
| | | WO | 2018022891 A1 | 01-02-2018 |

EPO FORM P0459

For more details about this annex : see Official Journal of the European Patent Office, No. 12/82

page 2 of 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020212331 A1
- WO 2020212337 A1
- WO 2021170646 A1
- WO 2021170645 A1